# FASCICULE DE BREVET EUROPEEN

(11) **EP 3 233 590 B1**
(45) Date de publication et mention de la délivrance du brevet: **06.02.2019**
(21) Numéro de dépôt: 15813763.8
(22) Date de dépôt: 15.12.2015
(51) Int. Cl.: B60R 25/021

(54) **ANTIVOL POUR UNE COLONNE DE DIRECTION DE VÉHICULE AUTOMOBILE**
DIEBSTAHLSICHERUNG FÜR EINE LENKSÄULE EINES KRAFTFAHRZEUGS
STEERING COLUMN LOCK FOR A MOTOR VEHICLE

(30) Priorité: 18.12.2014 EP 14307066
(43) Date de publication de la demande: 25.10.2017
(73) Titulaire: U-Shin France, 94000 Créteil (FR)
(72) Inventeur: JULIEN, Renaud, 94046 Creteil Cedex (FR)
(74) Mandataire: Gaillarde, Frédéric F. Ch.
(86) Numéro de dépôt international: PCT/EP2015/079742
(87) Numéro de publication internationale: WO 2016/096820

(56) Documents cités:
- EP-A1- 1 647 457
- FR-A1- 2 019 112
- FR-A1- 2 853 874
- FR-A1- 2 978 403
- JP-A- 2010 247 781

## Description

La présente invention concerne un antivol pour une colonne de direction de véhicule automobile.

L'invention se rapporte au domaine des antivols pour colonne de direction de véhicules automobiles destinés, en particulier, à commander le verrouillage d'une colonne de direction du véhicule à l'arrêt du véhicule automobile et le déverrouillage lors de l'allumage et du roulage dudit véhicule.

Il est connu que les antivols pour colonne de direction, comprennent un verrou ayant en général au moins un rotor mobile en rotation dans un stator à l'aide d'une clé conforme. Le rotor entraîne lors de sa rotation une came avec lequel il est lié qui est configurée pour déplacer un pêne dans une position de verrouillage et une position de déverrouillage. Dans la position de verrouillage, le pêne vient bloquer la colonne de direction en s'insérant dans un logement prévu sur la colonne de direction. Dans la position de déverrouillage, le pêne est entraîné via la came à se retirer de la colonne de direction laissant cette dernière libre en rotation.

Un véhicule automobile est particulièrement vulnérable en ce qui concerne les vols lorsque ce dernier est à l'arrêt. En effet, si un voleur réussit à retirer le pêne hors de la colonne de direction alors que la voiture est à l'arrêt, le véhicule est manoeuvrable une fois démarré.

Il existe donc un besoin d'augmenter l'invulnérabilité du véhicule automobile, en particulier de l'antivol, qui soit simple à mettre en oeuvre et efficace.

Le document JP 2010-247781 A décrit également un antivol de l'art antérieur.

A cet effet, la présente invention propose un antivol pour colonne de direction de véhicule automobile comprenant:
- un pêne mobile entre une position de verrouillage dans laquelle le pêne vient bloquer la colonne de direction et une position de déverrouillage dans laquelle ledit pêne laisse la colonne de direction libre en rotation,
- un verrou,
- une came entrainée en rotation autour d'un axe de rotation par l'intermédiaire du verrou et configurée pour entrainer le pêne en mouvement dans les positions de verrouillage et de déverrouillage, et
- un élément de blocage disposé à l'extrémité de la came en regard du pêne de sorte à bloquer le pêne en position de verrouillage et à autoriser le déplacement dudit pêne hors de la position de verrouillage du pêne, ledit élément de blocage étant disposé entre la came et le pêne, ledit élément de blocage étant mobile en rotation selon un axe colinéaire a l'axe de rotation de la came.

Un tel antivol permet de rendre très difficile, voir impossible, le retrait du pêne hors de la colonne de direction, lorsque le pêne est en position de verrouillage. Il est très difficile voire impossible, d'avoir accès à l'élément de blocage disposé entre la came et le pêne et donc de neutraliser cet élément de blocage.

Ainsi, de manière simple, peu coûteuse et efficace, l'antivol de l'invention permet d'augmenter la sécurité contre le vol de véhicule automobile.

Suivant des modes de réalisation préférés, l'antivol de colonne de direction de véhicule automobile selon l'invention comprend une ou plusieurs des caractéristiques suivantes, prises séparément ou en combinaison :
- l'élément de blocage comporte un bras de blocage du pêne en position de verrouillage et une partie élastique ramenant ledit bras de blocage en position de blocage du pêne dans la position de verrouillage ;
- la partie élastique est constituée d'une lame souple destinée à venir en butée contre un élément saillant de la came, tel qu'une excroissance du logement ;
- le bras de blocage comporte un bras de maintien destiné à maintenir le bras de blocage en position dans la came ;
- le bras de maintien est disposé entre deux éléments saillants du logement de la came ;
- l'élément de blocage est disposé dans un logement de la came ;
- les éléments saillants sont disposés dans le logement de la came ;
- l'antivol de l'invention comprenant en outre un rotor mobile en rotation selon un axe de rotation et configuré pour entraîner la came en rotation, l'axe de rotation du rotor et l'axe de rotation de la came n'étant pas colinéaires ;
- le rotor entraîne la came au moyen d'engrenages.

D'autres caractéristiques et avantages de l'invention apparaîtront à la lecture de la description qui suit d'un mode de réalisation préféré de l'invention, donné à titre d'exemple non limitatif et en référence aux dessins annexés sur lesquels :
- la figure 1 est une vue en perspective de côté d'un mode de réalisation d'un antivol selon l'invention,
- les figures 2a et 2b sont des vues en perspectives de côté de l'antivol selon le mode de réalisation de la figure 1 sans le boîtier extérieur,
- la figure 3 est une vue en perspective de face de la came, de l'élément de blocage et du pêne selon le mode de réalisation de la figure 1,
- la figure 4a est une vue de face de la came, de l'élément de blocage et du pêne selon le mode de réalisation de la figure 1 associé à une colonne de direction, le pêne étant dans une position de déverrouillage,
- la figure 4b est une vue de face de la came, de l'élément de blocage et du pêne selon le mode de réalisation de la figure 1 associé à une colonne de direction, le pêne étant dans la position de verrouillage,
- la figure 4c est une vue de face de la came, de l'élément de blocage et du pêne selon le mode de réalisation de la figure 1 associé à une colonne de direction, le pêne étant hors de la position de verrouillage,
- la figure 4d est une vue de face de la came, de l'élément de blocage et du pêne selon le mode de réalisation de la figure 1 associé à une colonne de direction, le pêne étant dans une position de déverrouillage,
- la figure 5a est une vue de face de la came et de l'élément de blocage selon le mode de réalisation de la figure 1, l'élément de blocage étant dans une position de repos,
- la figure 5b est une vue de face de la came et de l'élément de blocage selon le mode de réalisation de la figure 1, l'élément de blocage étant dans une position de contrainte selon le mode de réalisation de la figure 4a.

Sur les différentes figures, les éléments analogues sont désignés par des références identiques. En outre, les différents éléments ne sont pas nécessairement représentés à l'échelle afin de présenter une vue permettant de faciliter la compréhension de l'invention.

Une colonne de direction est mobile en rotation afin de transmettre le mouvement du volant aux roues du véhicule automobile. La colonne de direction d'un véhicule automobile comporte un ou plusieurs logements destinés à recevoir au moins partiellement le pêne afin de bloquer tout mouvement du volant lorsque le véhicule n'est pas en fonctionnement et autoriser un tel mouvement dans l'autre cas.

Comme représenté sur les figures, l'antivol 1 selon l'invention comporte :
- un pêne 2 mobile entre une position de verrouillage dans laquelle le pêne 2 vient bloquer la colonne de direction (30) et une position de déverrouillage dans laquelle ledit pêne 2 laisse la colonne de direction 30 libre en rotation,
- un verrou 3,
- une came 4 entrainée en rotation autour d'un axe de rotation par l'intermédiaire du verrou 3 et configurée pour entrainer le pêne 2 en mouvement dans les positions de verrouillage et de déverrouillage.

Le pêne 2, le verrou 3 et la came 4 sont disposés dans une enveloppe externe 5 protégeant les éléments constituants l'antivol 1.

On entend par « position de verrouillage », la position du pêne dans laquelle le pêne bloque la rotation de la colonne de direction.

On entend par « position de déverrouillage », la position du pêne dans laquelle ledit pêne laisse la colonne de direction libre en rotation.

Le pêne 2 peut se déplacer de la position de verrouillage à la position de déverrouillage et vice et versa, selon un mouvement axial avec une vitesse régulière ou non. Le mouvement axial est de direction sensiblement perpendiculaire à l'axe de rotation de la colonne de direction 30.

Le pêne 2 peut être de forme sensiblement rectangulaire et comporter une extrémité 2a ayant deux côtés biseautés afin de faciliter la remontée dudit pêne 2 en position de déverrouillage et la descente en position de verrouillage.

En position de verrouillage, l'extrémité 2a du pêne vient dans un logement 60 de la colonne de direction bloquant tout mouvement de rotation de cette dernière.

Le pêne 2 est réalisé dans un matériau résistant tel que le fritté SINT-D39®, afin de résister aux pressions exercées par la colonne de direction 30 sur ledit pêne 2 en position de verrouillage lorsque cette colonne de direction 30 tourne sur elle-même ou essaie de tourner sur elle-même.

Le pêne 2 peut être reçu dans un guide pêne 6 configuré pour guider le mouvement du pêne 2 dans les positions de verrouillage et de déverrouillage.

Le verrou 3 comporte un rotor 8 destiné à recevoir une clé conforme dans un logement interne 10 dudit rotor 8. Le rotor 8 est mobile en rotation selon un axe de rotation 12 dans un stator 14. Ledit stator 14 est fixe en rotation.

Il est possible d'adjoindre des éléments renforçant l'inviolabilité de l'antivol, tel qu'un moyen de supercondamnation 9.

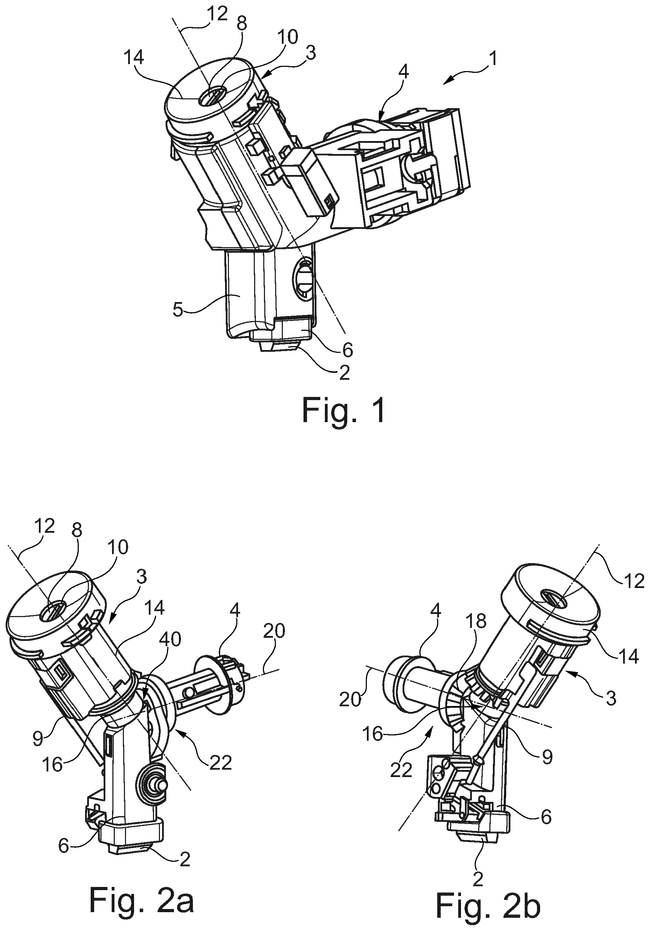

Selon le mode de réalisation représenté aux figures 2a et 2b, le moyen de supercondamnation peut comprendre une tige reliée au stator 14 et retenant une pièce de blocage du pêne dans la position de blocage. Ladite pièce de verrouillage étant disposée au niveau du corps du pêne 2. Ainsi lorsque le verrou 3 est arraché du reste de l'antivol 1, la tige ne retient plus la pièce de verrouillage qui vient bloquer le pêne 2 dans la position de verrouillage. Il n'est ainsi plus possible de passer en position de déverro uillage.

Le rotor 8 comporte une extrémité en regard dudit pêne 2 comprenant un moyen d'entraînement de la carne 4. Selon le mode de réalisation des figures 2a et 2b, le moyen d'entraînement comporte un engrenage, tel qu'un pignon 16, apte à venir coopérer avec un engrenage complémentaire 18 porté par la came 4. Chaque engrenage peut être réalisé de matière avec la came 4 et/ou le rotor 8.

La came 4 est mobile en rotation suivant l'axe de rotation 20. Selon le mode de réalisation représenté, l'axe de rotation de la came 20 n'est pas colinéaire avec l'axe de rotation 12 du rotor.

La came 4 est configurée pour entraînée le pêne 2. Pour ce faire, la came 4 comporte à l'extrémité 22 en regard du pêne 2 un profil de came 24. Le profil de came 24 peut présenter une pente constante ou non.

Dans ce cas, le pêne 2 comporte à son extrémité en regard de la came 4 un élément de contact 26 configuré pour être en contact et suivre la surface du profil de came 24 et ainsi permettre le mouvement de déplacement du pêne 2 dans les positions de verrouillage et de déverrouillage.

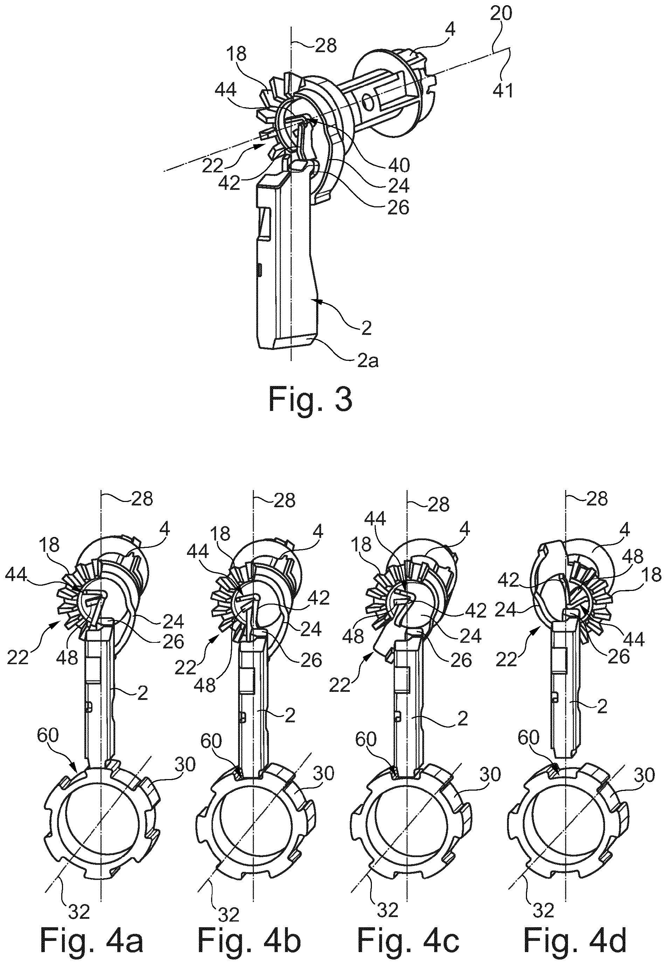

Comme représenté sur les figures 3, 4a à 4d, le pêne 2 a un mouvement axial selon l'axe 28. Comme représenté sur ces figures, la colonne de direction 30 est mobile en rotation suivant l'axe de rotation 32. L'axe de déplacement 28 du pêne est sensiblement perpendiculaire à l'axe de rotation 32.

Selon l'invention, l'antivol 1 comporte en outre un élément de blocage 40 disposé à l'extrémité 22 de la came en regard du pêne de sorte à bloquer le pêne 2 en position de verrouillage et à autoriser le déplacement dudit pêne 2 hors de la position de verrouillage du pêne, ledit élément de blocage 40 étant mobile en rotation selon un axe 41 colinéaire à l'axe de rotation 20 de la came.

Grâce au moyen de blocage 40, le retrait du pêne 2 hors de la colonne de direction 30, lorsque le pêne 2 est en position de verrouillage, est rendu très difficile, voir impossible. Il est très difficile voire impossible, d'avoir accès à l'élément de blocage 40 disposé entre la came 4 et le pêne 2 et donc de neutraliser cet élément de blocage 40.

L'élément de blocage 40 est disposé dans un environnement protégé et difficilement accessible car il est disposé sous l'enveloppe extérieure 5 de l'antivol contre la came 4. Il est caché par différents éléments de l'antivol de l'invention 1 et notamment par le moyen d'entraînement 16 et le guide pêne 6.

Ainsi, de manière simple, peu coûteuse et efficace, l'antivol 1 de l'invention permet d'augmenter la sécurité contre le vol de Véhicule automobile.

L'élément de blocage 40 peut être disposé contre l'extrémité 22 de la came en regard du pêne 2 ou dans un logement de ladite came 4. Selon le mode de réalisation représenté sur les figures, l'élément de blocage 40 est reçu dans un logement formé par les dents de l'engrenage 18 et le profil de came 24.

L'élément de blocage 40 est mobile en rotation selon un axe de rotation 41 sensiblement colinéaire à l'axe de rotation de la came 20. Pour ce faire, l'élément de blocage 40 peut comportant une tige (non représentée) configurée pour venir dans un logement disposée à l'extrémité 22 en regard du pêne, l'axe de la tige correspondant à l'axe de rotation 41 de l'élément de blocage 40 et étant disposée sensiblement colinéaire à l'axe de rotation 20 de la came.

Avantageusement, l'élément de blocage 40 comporte un bras de blocage 42 du pêne en position de verrouillage et une partie élastique 44 ramenant ledit bras de blocage 42 en position de blocage du pêne 2 dans la position de verrouillage.

Le bras de blocage 42 est configuré de sorte à venir contre l'élément de contact 26 du pêne destiné à suivre le profil de came 24, des sorte à bloquer le mouvement du pêne 2.

Le bras de blocage 42 et la partie élastique 44 sont reliés de sorte à être mobiles en rotation autour de l'axe de rotation 41 de l'élément de blocage.

La partie élastique 44 est constituée d'une lame souple destinée à venir en butée contre un élément saillant 46 de la came, tel qu'une excroissance du logement.

Le bras de blocage 42 comporte un bras de maintien 48 destiné à maintenir le bras de blocage 42 en position dans la carne 4.

Le bras de blocage 42, le bras de maintien 48 et la partie élastique 44 sont reliés de sorte à être mobiles en rotation autour de l'axe de rotation 41 de l'élément de blocage.

Le bras de maintien 48 est disposé entre deux éléments saillants 46 et 50 du logement de la came 4. Un des deux éléments saillants 46 ou 50 peut correspondre à celui permettant de contraindre la lame souple élastique.

Autrement dit, durant toute la course du pêne de la position de verrouillage a la position de déverrouillage et vice versa, le bras de maintien 48 reste entre les deux éléments saillants 46 et 50.

Les éléments saillants 46 et 50 peuvent être disposés sur la came 4 ou dans le logement de la came 4. Les éléments saillant 46 et 50 peuvent être rapportés ou formés de manière monobloc avec les parois de la came 4.

L'élément de blocage 40 peut être réalisé dans un ou plusieurs matériaux. Dans le cas où il est formé d'un unique matériau, la lame souple 44 présente une épaisseur inférieure à celle du bras de maintien 48 et le bras de blocage 42. Le bras de blocage 42 devant supporter une pression plus forte que le bras de maintien 48 du fait d'être en contact direct avec le pêne peut avoir une épaisseur supérieur à celle du bras de maintien 48.

Typiquement, il est réalisé dans un matériau plastique tel que le polyoxyméthylène, dit POM.

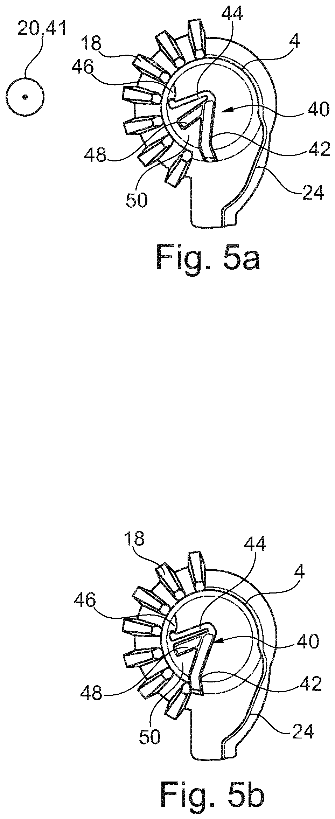

Comme représenté sur la figure 4a, l'antivol revient de la position de déverrouillage à la position de verrouillage. Dans cette position, le pêne 2 n'est pas disposé dans un logement 60. Le pêne 2 n'est donc pas positionné sous le bras de blocage 42 de l'élément de blocage. L'élément de contact 26 est alors disposé à côté dudit bras de blocage 42 poussant l'élément de blocage 40 dans son ensemble, comme illustré plus particulièrement à la figure 5b. Le bras de blocage 42 est poussé en direction de l'élément saillant 50. Le bras de maintien 48 est disposé entre les deux éléments saillants 46 et 50. La lame élastique 44 est précontrainte car elle est bloquée par l'élément saillant 46. Elle agit alors comme un ressort stockant de l'énergie pour la restituée lorsque le pêne 2 est en position de verrouillage.

Comme représenté sur la figure 4b, l'antivol 1 est en position de verrouillage, le pêne 2 est alors disposé dans un logement 60 de la colonne de direction. La lame élastique 44 est relâchée en position de repos (voir figure 5a) et entraîne le bras de maintien 46 et le bras de blocage 42 de sorte que le bras de blocage 42 vient en contact de l'élément de contact 26 pour bloquer le pêne. Dans cette position, le pêne ne peut plus être déplacé de manière axiale selon l'axe 28.

Lorsque l'utilisateur souhaite utiliser le véhicule automobile, il introduit la clé conforme dans le verrou 3 et entraîne la carne 4 qui déplace le pêne de la position de verrouillage à la position de déverrouillage.

Comme représenté sur la figure 4c, le pêne 2 est encore en position de verrouillage mais il commence à se dégager du logement 60 de la colonne de direction 30 en suivant le profil de la came 24. L'élément de blocage 40 étant maintenu en position correspondant à la position bloquant le pêne 2 et de repos pour la lame élastique 44, ledit élément de blocage 40 ne constitue pas une gêne pour le mouvement du pêne 2 pour passer de la position de verrouillage à la position de déverrouillage.

Comme représenté sur la figure 4d, le pêne 2 est en position de déverrouillage et ne bloque plus la colonne de direction 30. Comme il est visible sur cette figure, le pêne 2 arrive en butée en fin de course sur le profil de came 24. Le retour à la position de verrouillage est réalisée en tournant la came 4 dans le sens inverse, l'élément de blocage 40 ne constituant toujours pas une gêne 2 lorsque le pêne 2 passe de la position de déverrouillage à la position de verrouillage en passant par la position illustrée à la figure 4a où le pêne 2 met en précontrainte la lame élastique 44.

## Revendications

1. Antivol (1) pour une colonne de direction (30) de véhicule automobile comprenant :
- un pêne (2) mobile entre une position de verrouillage dans laquelle le pêne (2) vient bloquer la colonne de direction (30) et une position de déverrouillage dans laquelle ledit pêne (2) laisse la colonne de direction (30) libre en rotation,
- un verrou (3),
- une came (4) entrainée en rotation autour d'un axe de rotation (20) par l'intermédiaire du verrou (3) et configurée pour entrainer le pêne (2) en mouvement dans les positions de verrouillage et déverrouillage,
l'antivol (1) étant **caractérisé en ce qu'**il comprend :
- un élément de blocage (40) disposé à l'extrémité (22) de la came (4) en regard du pêne (2) de sorte à bloquer le pêne (2) en position de verrouillage et à autoriser le déplacement dudit pêne (2) hors de la position de verrouillage du pêne, ledit élément de blocage (40) étant disposé entre la came (4) et le pêne (2), ledit élément de blocage (40) étant mobile en rotation selon un axe (41) colinéaire à l'axe de rotation (20) de la came (4).

2. Antivol (1) selon la revendication 1, dans lequel l'élément de blocage (40) comporte un bras de blocage (42) du pêne (2) en position de verrouillage et une partie élastique (44) ramenant ledit bras de blocage (42) en position de blocage du pêne (2) dans la position de verrouillage.

3. Antivol (1) selon l'une quelconque des revendications précédentes, dans lequel la partie élastique (44) est constituée d'une lame souple destinée à venir en butée contre un élément saillant (46) de la came (2), tel qu'une excroissance du logement.

4. Antivol (1) selon l'une quelconque des revendications 2 ou 3, dans lequel le bras de blocage (42) comporte un bras de maintien (48) destiné à maintenir le bras de blocage (42) en position dans la came (4).

5. Antivol (1) selon la revendication précédente, dans lequel le bras de maintien (48) est disposé entre deux éléments saillants (46, 50) du logement de la came (4).

6. Antivol (1) selon l'une quelconque des revendications précédentes, dans lequel l'élément de blocage (40) est disposé dans un logement de la came (4).

7. Antivol (1) selon la revendication précédente en combinaison avec les revendications 3 ou 5, dans lequel les éléments saillants (46, 50) sont disposés dans le logement de la came.

8. Antivol (1) selon l'une quelconque des revendications précédentes, comprenant en outre un rotor mobile (8) en rotation selon un axe de rotation (12) et configuré pour entraîner la came (4) en rotation, l'axe de rotation (12) du rotor et l'axe de rotation (20) de la came n'étant pas colinéaires.

9. Antivol (1) selon la revendication précédente, dans lequel le rotor (8) entraîne la came (4) au moyen d'engrenages (16 ; 18).

## Patentansprüche

1. Diebstahlsicherung (1) für eine Lenksäule (30) eines Kraftfahrzeugs, umfassend:
- einen Riegel (2), der zwischen einer Verriegelungsposition, in der der Riegel (2) die Lenksäule (30) blockiert, und einer Entriegelungsposition beweglich ist, in der der Riegel (2) die Lenksäule (30) frei in Rotation lässt,
- ein Schloss (3),
- einen Nocken (4), der um eine Rotationsachse (20) mit Hilfe des Schlosses (3) in Rotation versetzt wird und konfiguriert ist, um den Riegel (2) in der Verriegelungsposition und der Entriegelungsposition in Bewegung zu versetzen,
wobei die Diebstahlsicherung (1) **dadurch gekennzeichnet ist, dass** sie Folgendes umfasst:
- ein Blockierelement (40), das am Ende (22) des Nockens (4) gegenüber dem Riegel (2) angeordnet ist, um den Riegel (2) in der Verriegelungsposition zu blockieren und die Verschiebung des Riegels (2) außerhalb der Verriegelungsposition des Riegels zuzulassen, wobei das Blockierelement (40) zwischen dem Nocken (4) und dem Riegel (2) angeordnet ist, wobei das Blockierelement (40) in Rotation gemäß einer Achse (41) beweglich ist, die zur Rotationsachse (20) des Nockens (4) kollinear ist.

2. Diebstahlsicherung (1) nach Anspruch 1, wobei das Blockierelement (40) einen Blockierarm (42) des Riegels (2) in der Verriegelungsposition und einen elastischen Teil (44) umfasst, der den Blockierarm (42) in der Verriegelungsposition in die Blockierposition des Riegels (2) zurückbringt.

3. Diebstahlsicherung (1) nach einem der vorhergehenden Ansprüche, wobei der elastische Teil (44) aus einem flexiblen Plättchen besteht, das ausgelegt ist, um gegen ein vorspringendes Element (46) des Nockens (2) wie eine Auswölbung der Aufnahme in Anschlag zu kommen.

4. Diebstahlsicherung (1) nach einem der Ansprüche 2 oder 3, wobei der Blockierarm (42) einen Haltearm (48) umfasst, der ausgelegt ist, um den Blockierarm (42) in seiner Position im Nocken (4) zu halten.

5. Diebstahlsicherung (1) nach dem vorhergehenden Anspruch, wobei der Haltearm (48) zwischen zwei vorspringenden Elementen (46, 50) der Aufnahme des Nockens (4) angeordnet ist.

6. Diebstahlsicherung (1) nach einem der vorhergehenden Ansprüche, wobei das Blockierelement (40) in einer Aufnahme des Nockens (4) angeordnet ist.

7. Diebstahlsicherung (1) nach dem vorhergehenden Anspruch in Kombination mit Anspruch 3 oder 5, wobei die vorspringenden Elemente (46, 50) in der Aufnahme des Nockens angeordnet sind.

8. Diebstahlsicherung (1) nach einem der vorhergehenden Ansprüche, umfassend außerdem einen beweglichen Rotor (8), der gemäß einer Rotationsachse (12) in Rotation und konfiguriert ist, um den Nocken (4) in Rotation zu versetzen, wobei die Rotationsachse (12) des Rotors und die Rotationsachse (20) des Nockens nicht kollinear sind.

9. Diebstahlsicherung (1) nach dem vorhergehenden Anspruch, wobei der Rotor (8) den Nocken (4) mit Hilfe von Getrieben (16; 18) antreibt.

## Claims

1. An antitheft (1) for a motor vehicle steering column (30) comprising:
- a bolt (2) movable between a locking position in which the bolt (2) blocks the steering column (30) and an unlocking position in which said bolt (2) lets the steering column (30) free to rotate,
- a lock (3),
- a cam (4) driven in rotation about an axis of rotation (20) via the lock (3) and configured to drive the bolt (2) in movement in the locking and unlocking positions,
the antitheft (1) being **characterized in that** it comprises:
- a blocking element (40) disposed at the end (22) of the cam (4) facing the bolt (2) so as to block the bolt (2) in the locking position and to authorize the displacement of said bolt (2) out of the locking position of the bolt, said blocking element (40) being disposed between the cam (4) and the bolt (2), said blocking element (40) being movable in rotation about an axis (41) collinear with the axis of rotation (20) of the cam (4).

2. The antitheft (1) according to claim 1, wherein the blocking element (40) includes a blocking arm (42) of the bolt (2) in the locking position and an elastic portion (44) bringing back said blocking arm (42) in the blocking position of the bolt (2) in the locking position.

3. The antitheft (1) according to any one of the preceding claims, wherein the elastic portion (44) consists of a flexible blade intended to abut against a protruding element (46) of the cam (2), such as a protrusion of the housing.

4. The antitheft (1) according to any one of claims 2 or 3, wherein the blocking arm (42) includes a holding arm (48) intended to hold the blocking arm (42) in position in the cam (4).

5. The antitheft (1) according to the preceding claim, wherein the holding arm (48) is disposed between two protruding elements (46, 50) of the housing of the cam (4).

6. The antitheft (1) according to any one of the preceding claims, wherein the blocking element (40) is disposed in a housing of the cam (4).

7. The antitheft (1) according to the preceding claim in combination with claims 3 or 5, wherein the protruding elements (46, 50) are disposed in the housing of the cam.

8. The antitheft (1) according to any one of the preceding claims, further comprising a rotor (8) movable in rotation along an axis of rotation (12) and configured to drive the cam (4) in rotation, the axis of rotation (12) of the rotor and the axis of rotation (20) of the cam are not collinear.

9. The antitheft (1) according to the preceding claim, wherein the rotor (8) drives the cam (4) by means of gears (16; 18).
